# EUROPEAN PATENT APPLICATION

(11) **EP 3 404 548 A1**
(43) Date of publication of application: **21.11.2018**
(21) Application number: 18168201.4
(22) Date of filing: 19.04.2018
(51) Int. Cl.: G06F 11/14

(54) **TRANSMISSION CONTROL PROGRAM, TRANSMISSION CONTROL DEVICE AND TRANSMISSION CONTROL METHOD**

(30) Priority: 21.04.2017 JP 2017084899
(71) Applicant: FUJITSU LIMITED, Kanagawa 211-8588 (JP)
(72) Inventor: IKEDA, Hironori, Kanagawa, 211-8588 (JP); TAKAHASHI, Ryohei, Kanagawa, 211-8588 (JP); TOMIYAMA, Yoshihide, Kanagawa, 211-8588 (JP)
(74) Representative: Hoffmann Eitle

(57) **Abstract**

A transmission control program that causes a computer to execute a process including transmitting update data to a first backup device in a specified period, the specified period being a period after a first backup data is generated and before a second backup data is generated, causing the first backup device to transmit the update data to a second backup device, transmitting the second backup data to the first backup device, determining whether to cause the first backup device to transmit the second backup data to the second backup device, and causing the first backup device to transmit a generation request of the second backup data to the second backup device when the determining does not determine to cause the first backup device to transmit the second backup data.

## Description

### FIELD

The embodiment discussed herein is related to a transmission control program, a transmission control device and a transmission control method.

### BACKGROUND

In a database system, the availability of the database system is enhanced by making data redundant.

For example, the database (DB) server generates backup data of the data of the database and stores the backup data in another device at regular intervals. Thus, for example, even when a failure occurs in the DB server, the database may be restored using the data stored in the other device, and thereby complete loss of the data of the database may be avoided.

Also, if a device is additionally installed as another device storing the data at a location geographically remote from the DB server, complete loss of the data of the database may be avoided even when the DB server has a failure due to a cause such as a disaster.

Related techniques are disclosed in, for example, Japanese Laid-open Patent Publication No. 7-84728.

### SUMMARY

According to an aspect of the invention, a transmission control program that causes a computer to execute a process, the process including transmitting update data to a first backup device in a specified period, the update data indicating a content of one or more updates regarding data in a database during the specified period, the specified period being a period after a first backup data is generated and before a second backup data is generated, causing the first backup device to transmit the update data to a second backup device, transmitting the second backup data to the first backup device when the second backup data is generated, determining whether to cause the first backup device to transmit the second backup data to the second backup device based on a data amount of the second backup data, a data amount of the update data, and a communication state of a communication path between the first backup device and the second backup device, and causing the first backup device to transmit a generation request of the second backup data to the second backup device without transmitting the second backup data to the second backup device when the determining does not determine to cause the first backup device to transmit the second backup data.

### BRIEF DESCRIPTION OF DRAWINGS

FIG. 1 illustrates an example of a system configuration according to the embodiment;
FIG. 2 is a functional block diagram illustrating a functional configuration of a backup server;
FIG. 3 is a functional block diagram illustrating a functional configuration of a DB server;
FIG. 4 is a functional block diagram illustrating a functional configuration of a management device;
FIG. 5 is a functional block diagram illustrating a functional configuration of a backup server;
FIG. 6 is a sequence diagram illustrating a processing flow when incremental backup is executed;
FIG. 7 is a flowchart illustrating a processing flow in the DB server when full backup is executed;
FIG. 8 illustrates an example of information stored in a communication speed information storage unit of the management device;
FIG. 9 illustrates an example of information stored in a write speed information storage unit of the management device;
FIG. 10 is a flowchart illustrating a processing flow in the backup server when the full backup is executed; and
FIG. 11 illustrates a hardware configuration example of the DB server according to the embodiment.

### DESCRIPTION OF EMBODIMENT

As an example of the technique described above, a system configuration may be considered in which a DB server and a backup server, that is, a computer for storing backup data are provided at one data center, and a backup server, that is, a computer for storing backup data are further provided at another data center. In this case, backup data is transmitted using a communication path connecting the two data centers.

However, in many cases, the data centers are equipped with numerous DB servers and backup servers, which may increase the amount of transmitted backup data and thereby cause a congestion in the communication path connecting the data centers with each other. When a congestion occurs in the communication path, a delay occurs in transmission of the backup data, or in other words, reflection of the backup data. The delay in the reflection of the backup data increases a restoration time for restoring the DB servers and impairs follow-up performance of the backup data to data update.

According to one aspect of the present disclosure, it is an object of the present disclosure to suppress a delay in the reflection of backup data.

The following describes an embodiment of the present disclosure with reference to the accompanying drawings.

### [System Overview]

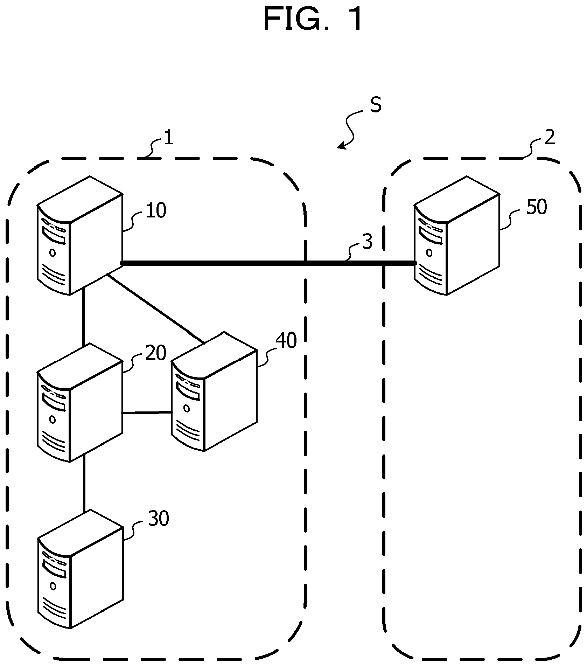

FIG. 1 illustrates an example of a system configuration according to the embodiment. An information processing system S of this embodiment includes two major regions: an active system region 1 and a standby system region 2. Each of the active system region 1 and the standby system region 2 is a data center provided with multiple information processing apparatuses. In this embodiment, the active system region 1 and the standby system region 2 are located at places geographically remote from each other. Multiple standby system regions may exist for one active system region.

The active system region 1 includes a backup server 10, a DB server 20, an application (AP) server 30, and a management device 40. In the active system region 1, for example, the content of a database managed by the DB server 20 is updated at the request of the AP server 30. The DB server 20 updates the content of the data base in response to the request, and transmits information indicating the content of the update to the backup server 10 at regular intervals. The backup server 10 stores information received from the DB server 20, for example, into a storage unit of the backup server 10. In other words, transmission of information from the DB server 20 to the backup server 10 is execution of the backup of the database using the backup server 10. In the description below, above information indicating the content of the updated data base may be referred to as "backup information". The management device 40 is an information processing apparatus configured to manage various information used in processing described in this embodiment. Details of the management device 40 are described later in detail.

This embodiment employs a configuration with a combination use of full backup (or may be referred to as complete backup) and incremental backup between the DB server 20 and the backup server 10.

The full backup is a method of generating the entire data in the database for every backup processing. Backup data obtained by the full backup (hereinafter referred to as "full backup information") may be a disk image of the database. The full backup has an advantage in that restoring process of the data base using the full backup information is executable faster than the other method. Also, the full backup is capable of forming one set of full backup information in which the entire data in the database in a certain state is stored. On the other hand, since the entire database is backed up, a processing time for generating the full backup information tends to be long and the size of the full backup information per generation tends to large. Accordingly, the full backup at a high frequency is difficult to conduct, or consumes a huge amount of information processing resources.

The incremental backup is a method of setting, as an initial state, a state of a database at a certain timing (for example, the state is backup data obtained by the above full backup) and generating backup data of only part of the data updated (modified) (hereinafter referred to as "incremental backup information (piece)"). The incremental backup has an advantage in that only modified data is backed up, and thus a processing time for generating the incremental backup information piece is shorter than that of the full backup. Also, the size of each incremental backup information piece may be smaller than the size of the full backup information. On the other hand, when many modifications are made on the data in the initial state or update or the like on the same data takes place multiple times, a large number of the incremental backup information pieces are generated, and accordingly the accumulated incremental backup information pieces are large in size as a whole. Also, since the database is restored using all the accumulated incremental backup information pieces, a time for database restoration processing is longer than that for the full backup.

In this embodiment, the full backup is executed at regular intervals, while the incremental backup is executed at time intervals shorter than the full backup in order to cover the disadvantage of the full backup. With this configuration, it is possible to follow data updating in the database by performing the incremental backup even without frequent execution of the full backup. When new full backup information is generated, the incremental backup information pieces whose modification has been reflected on the new full backup information are deleted. This suppresses an increase in the data volume due to accumulation of the incremental backup information pieces.

In this embodiment, in addition to the backup processing between the DB server 20 and the backup server 10 described above, the content in the database managed by the DB server 20 is also backed up to a backup server 50 of the standby system region 2. Specifically, the backup server 10 stores the incremental backup information received from the DB server 20 and transmits the incremental backup information to the backup server 50. In this case, transmission of the backup information is data communication between the active system region 1 and the standby system region 2, which may be referred to as a region-to-region transfer. The backup server 10 may also transmit the full backup information received from the DB server 20 to the backup server 50. Thus, for example, the backup information is held in the backup server 50 even when the entire active system region 1 is disabled due to a cause including a disaster. Therefore, for example, the operation of the database may be resumed when the DB server (not illustrated) in the standby system region 2 is activated to restore the database using the backup information. As a method of making the database redundant, there is a configuration in which multiple regularly-operating DB servers are synchronized with each other (may be referred to as a hot standby). This embodiment employs a configuration in which the backup information is stored into the backup server and only the active DB server operates (may be referred to as a cold standby). This allows build-up of a system at a cost lower than that of the hot standby in terms of the resources and cost of the information processing apparatuses.

Backup servers 10 and 50, the DB server 20, the AP server 30, and the management device 40 illustrated in FIG. 1 may be implemented respectively, for example, by a hardware including a server apparatus. Segmentation of the hardware illustrated in FIG. 1 is just an example. The backup server 10, the DB server 20, the AP server 30, and the management device 40 may be implemented by four or less information processing apparatuses or five or more information processing apparatuses. However, the backup server 50, which belongs to a different region, is implemented by hardware different from those of the backup server 10, the DB server 20, the AP server 30, and the management device 40.

### [Problems in Transmission of Backup Information]

As described above, the backup information is transmitted between the active system region 1 and the standby system region 2. It is supposed that many DB servers and backup servers other than those illustrated in FIG. 1 operate at the data center of the active system region 1. In this case, backup information corresponding to the number of DB servers and backup servers in operation has to be transmitted to the standby system region 2. Increase of the transmission data may increase a possibility of causing a congestion in the communication path. This may cause a problem with the reflection of backup data as described above. In particular, the full backup information, which has a large size of data, supposedly gives significant effects on the congestion of the communication path.

### [Functional Configuration of Backup Server 10]

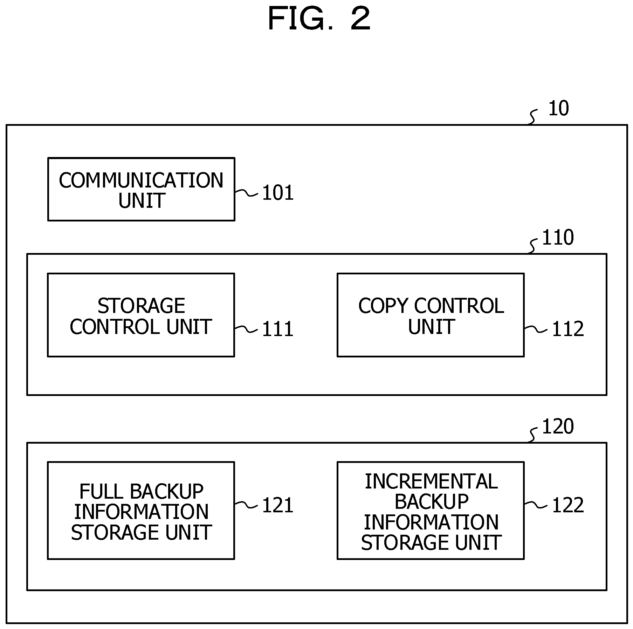

FIG. 2 is a functional block diagram illustrating a functional configuration of the backup server 10. The backup server 10 includes, for example, a communication unit 101, a processing unit 110, and a storage unit 120, as illustrated in FIG. 2.

The communication unit 101 is capable of executing communication with other devices including the backup server 50, the DB server 20, and the management device 40 by wire or radio. The communication unit 101 is, for example, a communication device including a network adapter and a network interface controller (NIC) of the backup server 10.

The processing unit 110 includes a storage control unit 111 and a copy control unit 112.

The storage control unit 111 is a control unit configured to control storing of the backup information received from the DB server 20 into the storage unit 120 when the incremental backup or the full backup described later is executed.

The copy control unit 112 executes a request (instruction) of a processing to the backup server 50 when the incremental backup or the full backup described later is executed.

The storage unit 120 includes a full backup information storage unit 121 and an incremental backup information storage unit 122. The full backup information storage unit 121 is a storage unit configured to store the full backup information received from the DB server 20. The incremental backup information storage unit 122 is a storage unit configured to store the incremental backup information received from the DB server 20.

### [Functional Configuration of DB Server 20]

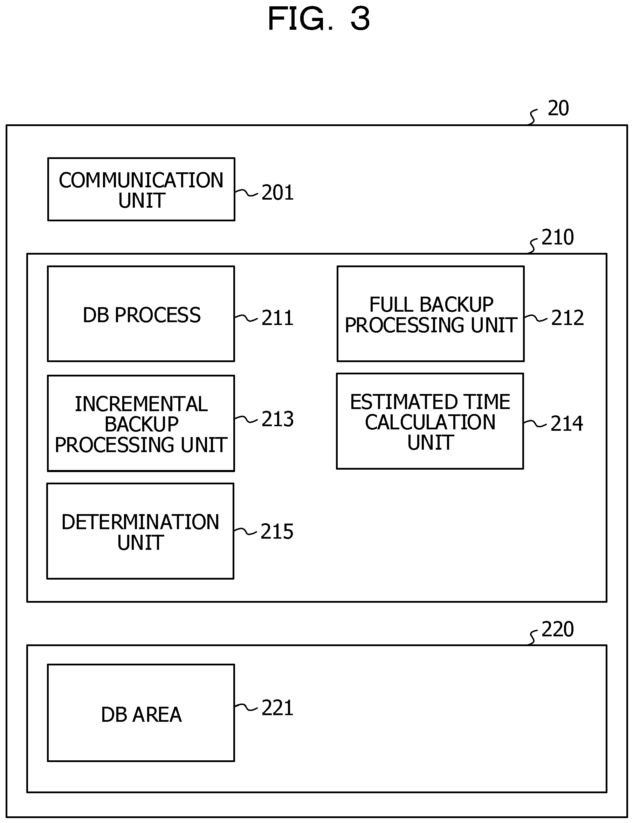

FIG. 3 is a functional block diagram illustrating a functional configuration of the DB server 20. The DB server 20 includes a communication unit 201, a processing unit 210, and a storage unit 220.

The communication unit 201 is capable of communicating with other devices including the backup server 10, the AP server 30, and the management device 40 by wire or radio. The communication unit 201 is, for example, a communication device including a network adapter and a NIC of the DB server 20.

The processing unit 210 includes a DB process 211, a full backup processing unit 212, an incremental backup processing unit 213, an estimated time calculation unit 214, and a determination unit 215.

The DB process 211 performs so-called database control including updating of the data in the database.

The full backup processing unit 212 generates the full backup information of the content of the data in the database, for example, in a predetermined cycle.

The incremental backup processing unit 213 generates the incremental backup information of the content of the data in the database, for example, in a predetermined cycle. Generation cycle of the incremental backup information is set shorter than the generation cycle of the full backup information.

The estimated time calculation unit 214 calculates the estimated time used in the determination processing when the full backup described later is executed. The determination processing is described later in detail.

The determination unit 215 executes the determination processing when the full backup described later is executed.

The storage unit 220 includes a DB area 221 which is a storage area serving as a database. The storage unit 220 and the DB area 221 are so-called storage areas serving as a database. Data stored in the DB area 221 is data to be backed up by the full backup and the incremental backup.

### [Functional Configuration of Management Device 40]

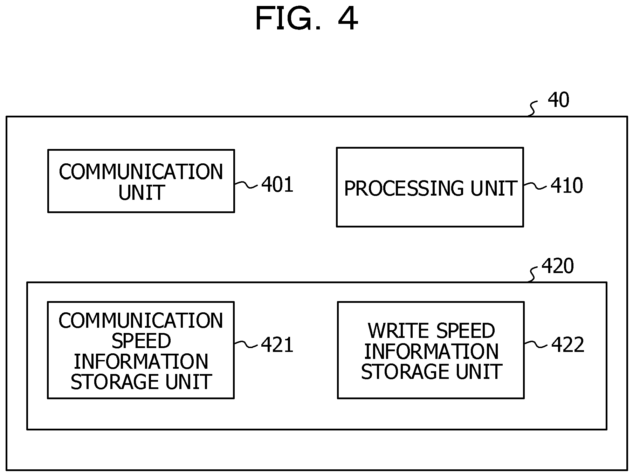

FIG. 4 is a functional block diagram illustrating a functional configuration of the management device 40. The management device 40 includes a communication unit 401, a processing unit 410, and a storage unit 420.

The communication unit 401 is capable of executing communication with other devices including the backup server 10 and the DB server 20 by wire or radio. The communication unit 401 is, for example, a communication device including a network adapter and a NIC of the management device 40.

The processing unit 410 operates, for example, as a control unit in transmission and reception of information stored in the storage unit 420.

The storage unit 420 includes a communication speed information storage unit 421 and a write speed information storage unit 422. Information stored in respective storage units is described later.

### [Functional Configuration of Backup Server 50]

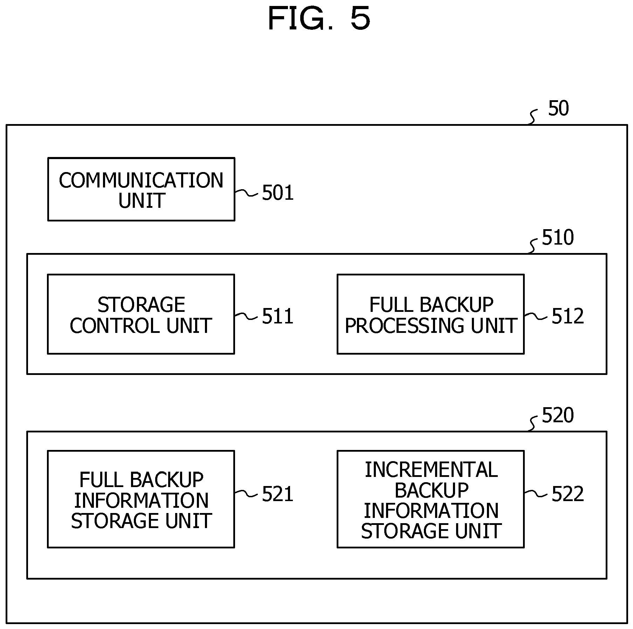

FIG. 5 is a functional block diagram illustrating a functional configuration of the backup server 50.

The communication unit 501 is capable of executing communication with other devices including the backup server 10 by wire or radio. The communication unit 501 is, for example, a communication device including a network adapter and a NIC of the backup server 50.

A processing unit 510 includes a storage control unit 511 and a full backup processing unit 512.

The storage control unit 511 is a control unit configured to control when the backup information is stored into a storage unit 520.

The storage unit 520 includes a full backup information storage unit 521 and an incremental backup information storage unit 522. The full backup information storage unit 521 is a storage unit configured to store the full backup information. The incremental backup information storage unit 522 is a storage unit configured to store the incremental backup information received from the backup server 10.

### [Incremental Backup Processing]

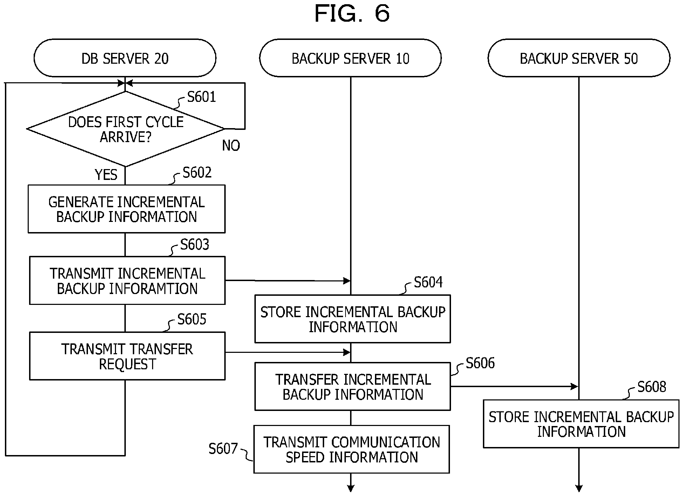

FIG. 6 is a sequence diagram illustrating a processing flow when the incremental backup according to this embodiment is executed.

First, the incremental backup processing unit 213 of the DB server 20 determines whether a first cycle arrives (step S601). The first cycle herein referred to is a cycle which is set as a time interval (for example, five minutes interval) to acquire the incremental backup of the content of the data in the database. Thus, in the database managed by the DB server 20, the incremental backup of the database is performed at a time interval indicated in the first cycle. However, the setting of the first cycle is just one configuration of this embodiment, and a specific cycle setting time may be changeable as appropriate. The incremental backup may not be executed in an equi-spaced cycle.

When determined that the first cycle arrives (when time corresponding to one cycle has passed since previous incremental backup processing), the processing in step S602 is executed. On the other hand, when determined that the first cycle does not arrive, the processing in step S601 is re-executed until the first cycle arrives.

In step S602, the incremental backup processing unit 213 generates the incremental backup information of the database (step S602). Then, the incremental backup processing unit 213 transmits the generated incremental backup information to the backup server 10 (step S603). The storage control unit 111 of the backup server 10 stores the incremental backup information received from the DB server 20 into the incremental backup information storage unit 122 thereof (step S604).

In addition to transmission of the incremental backup information, the incremental backup processing unit 213 transmits, to the backup server 10, a transfer request requesting to also transfer the incremental backup information to the backup server 50 of the standby system region 2 (step S605).

The copy control unit 112 of the backup server 10, which has received the transfer request, transmits (transfers) the incremental backup information received from the DB server 20 to the backup server 50 of the standby system region 2 (step S606). The copy control unit 112 also acquires data communication speed for transmitting the incremental backup information in step S606. The copy control unit 112 transmits the acquired data communication speed to the management device 40 as information of the communication speed between the active system region 1 and the standby system region 2 (step S607). The management device 40 stores the received communication speed information into the communication speed information storage unit 421. Then, when the communication speed information is stored in the communication speed information storage unit 421, the management device 40 updates information in the communication speed information storage unit 421 with the communication speed information transmitted in step S607 or newest communication speed information.

The storage control unit 511 of the backup server 50, which has received the incremental backup information from the backup server 10, stores the incremental backup information into the incremental backup information storage unit 522 thereof (step S608).

By executing the above processing, the incremental backup information is held in the backup server 10 of the active system region 1 and the backup server 50 of the standby system region 2. When the next cycle arrives, the DB server 20 re-executes the processing in step S602 and the following steps. The processing flow illustrated in FIG. 6 is one configuration of this embodiment. Steps S603 to S606 may be executed in an order different from that illustrated in FIG. 6, for example. In some configuration, for example, the incremental backup information and the transfer request may be transmitted simultaneously.

### [Full Backup Processing]

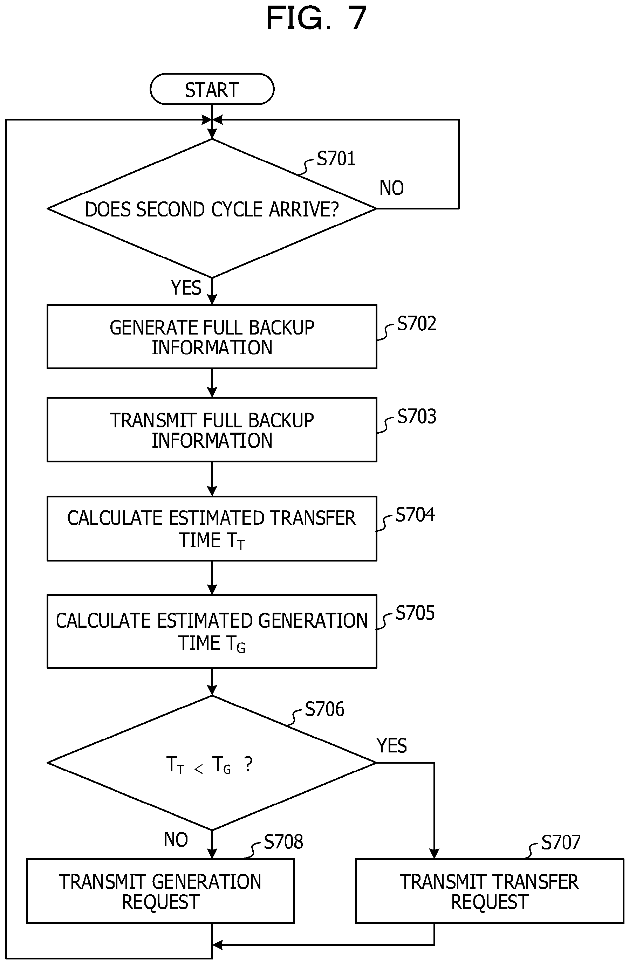

FIG. 7 is a flowchart illustrating a processing flow in the DB server 20 when the full backup according to this embodiment is executed.

The full backup processing unit 212 of the DB server 20 determines whether a second cycle arrives (step S701). The second cycle herein referred to is a cycle which is set as a time interval (for example, 24 hours) to acquire the full backup of the content of the data in the database. Thus, in the database managed by the DB server 20, the full backup of the database is performed at a time interval indicated in the second cycle. However, setting of the second cycle is just one configuration of this embodiment, and a specific cycle setting time may be changeable as appropriate. The full backup may not be executed in an equi-spaced cycle.

When determined that the second cycle arrives (when time corresponding to one cycle has passed since previous incremental backup processing), the processing in step S702 is executed. On the other hand, when determined that the second cycle does not arrive, the processing in step S701 is re-executed until the second cycle arrives.

In step S702, the full backup processing unit 212 generates the full backup information of the database (step S702). Then, the full backup processing unit 212 transmits the generated full backup information to the backup server 10 (step S703).

Next, the estimated time calculation unit 214 calculates the estimated time (estimated transfer time T_{T}) for transmitting the full backup information generated in step S702 from the backup server 10 to the backup server 50 (step S704).

Specifically, the estimated time calculation unit 214 identifies data the size of the full backup information generated in step S702. The estimated time calculation unit 214 acquires, from the management device 40, information indicating the communication speed used when executing data communication between the regions.

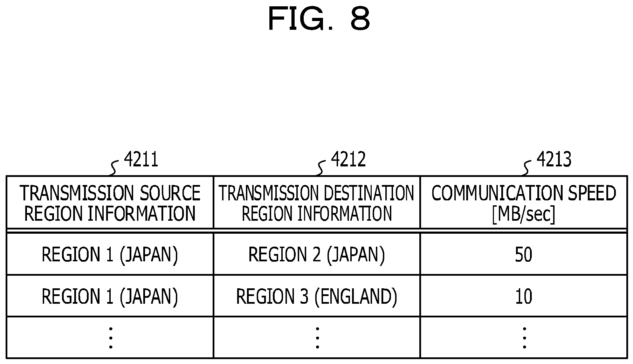

FIG. 8 illustrates an example of information stored into the communication speed information storage unit 421 of the management device 40. For example, as illustrated in FIG. 8, the communication speed information storage unit 421 stores transmission source region information 4211, transmission destination region information 4212, and communication speed 4213 by associating with each other.

The transmission source region information 4211 is identification information that identifies either one of the regions when data communication is performed between the regions. The transmission destination region information 4212 is identification information that identifies the other region when data communication is performed between the regions.

The communication speed 4213 is information indicating the communication speed used when data communication is performed between two regions indicated in the transmission destination region information 4212 and the transmission source region information 4211. For the purpose of explanation, in this embodiment, "Region 1 (Japan)" illustrated in FIG. 8 corresponds to the active system region 1, and "Region 2 (Japan)" corresponds to the standby system region 2. When multiple standby system regions exist for the active system region 1, information indicating the communication speed to respective standby system regions may be stored into the communication speed information storage unit 421 as illustrated in FIG. 8.

Information stored as the communication speed 4213, for example, may be acquired and stored by the method illustrated in step S607. However, the method illustrated in step S607 is an example of the method of acquiring the communication speed, and may be replaced with any other method allowing acquisition of the region-to-region communication speed. A communication speed used for data communication of a device other than the backup server 10 illustrated in FIG. 1 may be utilized as a communication speed for data communication between the active system region 1 and the standby system region 2.

The estimated transfer time T_{T} of step S704 may be calculated, for example, by dividing the data size of the full backup information generated in step S702 by the communication speed indicated in the communication speed 4213. However, a specific calculation method is not limited to one method, and may be replaced with any other calculation method capable of calculating the time requested for transmission of the full backup information.

Further, the estimated time calculation unit 214 calculates the estimated time (estimated generation time T_{G}) for generating (updating) the full backup information by the backup server 50 to generate (update) (step S705).

Specifically, the estimated time calculation unit 214 identifies the incremental backup information generated before the full backup information for which the estimated generation time T_{G} is calculated (hereinafter referred to as "new full backup information") is generated and after full backup information older by one cycle than the full backup information for which the estimated generation time T_{G} is calculated (hereinafter referred to "previous full backup information") is generated. In other words, the estimated time calculation unit 214 identifies incremental backup information corresponding to data update not reflected in the previous full backup information. The incremental backup information identified in this step is multiple (multiple information) when the incremental backup is executed two or more times during the second cycle. The estimated time calculation unit 214 calculates the sum of the data size of the identified incremental backup information.

The estimated time calculation unit 214 acquires, from the management device 40, the write speed at which the backup server 50 writes data into the storage unit 520 (or full backup information storage unit 521).

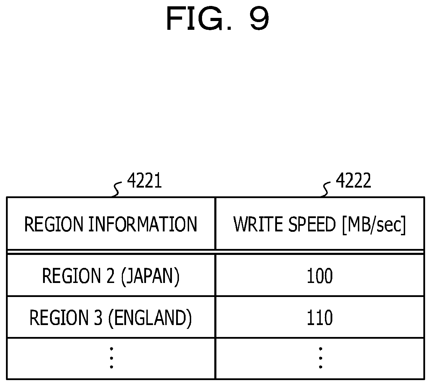

FIG. 9 illustrates an example of information stored in a write speed information storage unit 422 of the management device 40. The write speed information storage unit 422 stores, for example as illustrated in FIG. 9, region information 4221 and write speed 4222 by associating with each other.

The region information 4221 is identification information that identifies the standby system region. In this embodiment, the region information 4221 corresponds to the transmission destination region information 4212 of FIG. 8. In the same manner as FIG. 8, for the purpose of explanation, "region 2 (Japan)" of FIG. 9 corresponds to the standby system region 2 in this embodiment.

The write speed 4222 is information indicating a write speed at which the full backup information is written into a backup server of the standby system region. For example, when a hard disk drive (HDD) is used as the storage unit 520 (or full backup information storage unit 521), the write speed 4222 is a write speed at which data is written into the HDD. In the same manner as the example of FIG. 8, when multiple standby system regions exist for the active system region 1, information indicating the write speed to respective standby system regions may be stored into the write speed information storage unit 422 as illustrated in FIG. 9. Also, when one standby system region includes multiple backup servers or storage devices used as the write speed information storage unit 422, information indicating the write speed may be stored in each of the multiple backup servers and storage devices.

For example, the write speed may be acquired by the management device 40 as performance information of the hardware of the backup server 50 when the system is built up (or when the backup server 50 is activated) and stored into the write speed information storage unit 422. The write speed depends on the hardware of the information processing apparatus and the storage device. Thus, it is supposed that the write speed does not vary significantly unless there is a change of the hardware. However, the management device 40 may re-acquire information of the write speed at regular intervals or at a timing when the hardware of the backup server 50 is changed.

The estimated generation time T_{G} of step S705 may be calculated, for example, by dividing the sum of the data size of the identified incremental backup information by a write speed indicated in the write speed 4222. This calculation method utilizes a property that a time for generating (or updating) the full backup information by the backup server 50 and a time for writing the incremental backup information to be reflected on the full backup information are close to each other. In actual generation (or updating) of the full backup information, an additional time such as an activation time of the full backup processing unit 512 and a processing time for applying the generated full backup information as update information further occurs. For this reason, a value obtained by adding such additional time to the estimated generation time T_{G} calculated by the calculation method described above may be used as the estimated generation time. However, the additional time is supposed to be normally small relative to the estimated generation time T_{G}. Thus, the estimated generation time T_{G} may be simply adopted as an estimated time. A specific calculation method is not limited to one method, and may be replaced with any other calculation method that allows calculation of the time for generating (updating) the full backup information by the backup server 50.

The processing in steps S704 and S705 may be executed in a reverse order, or the processing in two steps may be executed in parallel.

After execution of steps S704 and S705, the determination unit 215 compares the estimated transfer time T_{T} and the estimated generation time T_{G} with each other. Then, the determination unit 215 determines whether the estimated transfer time TT is shorter than the estimated generation time T_{G} (step S706). More specifically, the determination unit 215 determines which is shorter, the estimated transfer time T_{T} or the estimated generation time T_{G}, and by which shorter.

When the estimated transfer time T_{T} is shorter than the estimated generation time T_{G} (step S706: YES), the full backup processing unit 212 transmits a transfer request to the backup server 10 (step S707). The transfer request herein referred to is a request that requests the backup server 10 to also transmit the full backup information transmitted to the backup server 10 in step S703 to the backup server 50. In this case, when the full backup information generated in the DB server 20 is transmitted to the backup server 10 and the backup server 50, the full backup is reflected in both of the servers.

On the other hand, when the estimated transfer time T_{T} is equal to or longer than the estimated generation time T_{G} (step S706: NO), the full backup processing unit 212 transmits a generation request to the backup server 10 (step S708). The generation request herein referred to is a request that requests the backup server 50 to generate full backup information equivalent to the full backup information transmitted to the backup server 10 in step S703. In this case, the full backup information generated in the DB server 20 is not transmitted to the backup server 50, and when the full backup information is generated on the side of the standby system region, the full backup is reflected in both of the backup servers.

After execution of step S707 or step S708, processing returns to step S701 again. When the next cycle arrives, the processing in step S702 and the following steps are re-executed.

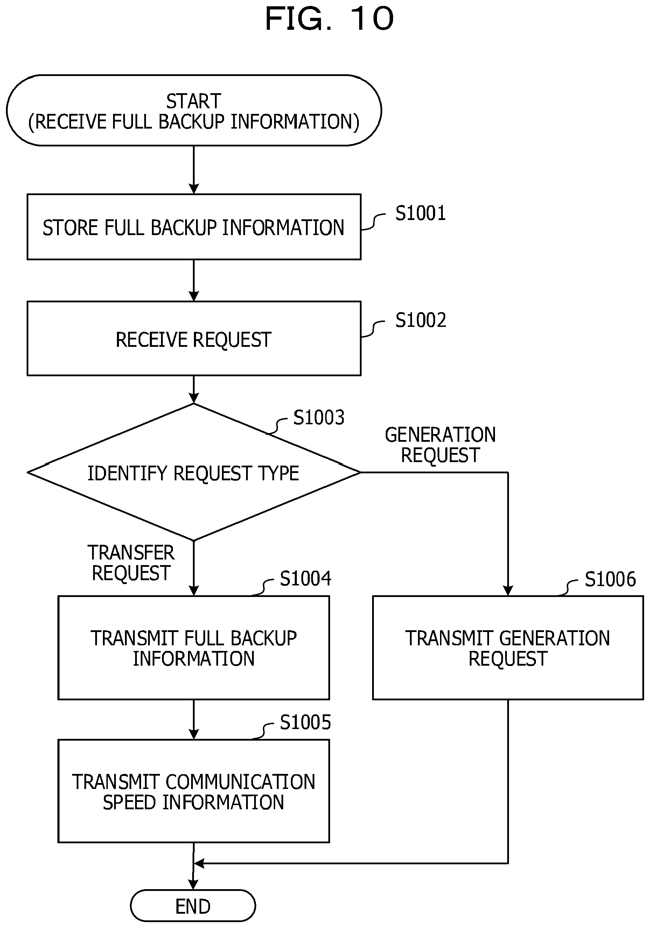

FIG. 10 is a flowchart illustrating a processing flow in the backup server 10 when the full backup according to this embodiment is executed. A series of processing illustrated in FIG. 10 is started, for example, when the backup server 10 receives the full backup information from the DB server 20.

The storage control unit 111 stores the full backup information received from the DB server 20 into the full backup information storage unit 121 thereof (step S1001).

Next, when the backup server 10 receives the request (the request transmitted in step S707 or step S708) from the DB server 20 (step S1002), the copy control unit 112 identifies type of the received request (step S1003). More specifically, the copy control unit 112 determines which the request received in step S1002 is, the transfer request or the generation request described above. Then, the copy control unit 112 executes a processing according to the identified result.

When the received request is the transfer request (step S1003: transfer request), the copy control unit 112 transmits the full backup information received from the DB server 20 to the backup server 50 (step S1004). Thus, the copy control unit 112 causes the full backup information storage unit 521 of the backup server 50 to also store the full backup information received from the DB server 20.

The copy control unit 112 transmits the communication speed used when transmitting the fullback information to the management device 40 as information of the communication speed between the active system region 1 and the standby system region 2 (step S1005). The management device 40 stores the received communication speed information into the communication speed information storage unit 421. Then, when information of the communication speed is stored in the communication speed information storage unit 421, the management device 40 updates information of the communication speed information storage unit 421 with the communication speed information transmitted in step S1005 or newest communication speed information.

On the other hand, when the request is the generation request (step S1003: generation request), the copy control unit 112 transmits an instruction to generate the full backup information to the backup server 50 using, for example, a command to generate the full backup information (step S1006). In this case, the backup server 50 does not generate the full backup information from the backup server 10. Instead, the backup server 50, which has received the instruction, generates the full backup information in itself based on the incremental backup information. The incremental backup information storage unit 522 of the backup server 50 stores the incremental backup information generated after the last full backup processing in the backup server 50. Then, the full backup processing unit 512 generates the full backup information which reflects the incremental backup information stored in the incremental backup information storage unit 522. Then, the full backup processing unit 512 stores the generated full backup information into the full backup information storage unit 521 as latest full backup information. The full backup processing unit 512 may be a part of functions of the DB server added into the backup server 50.

Thus, full backup information equivalent to the full backup information generated by the full backup processing unit 212 in step S702 is generated in the backup server 50.

As described above, the processing result of the determination unit 215 determines whether to transmit the full backup information from the backup server 10 to the backup server 50. According to this embodiment, whether to transmit the full backup information to the backup server 50 is determined based on the data amount of the full backup information and the incremental backup information in the backup processing of the database. The estimated transfer time T_{T} calculated based on the data amount of the full backup information and the estimated generation time T_{G} calculated based on the data amount of the incremental backup information are compared to each other. Then, when the estimated generation time T_{G} is shorter, the full backup information is generated in the standby system region 2, and the full backup information is not transmitted from the active system region 1. Thus, the full backup information may be reflected into the backup server 50 of the standby system region 2 more promptly, and thereby delay in the reflection of backup may be suppressed. When the full backup information is generated in the standby system region 2, transmission of the full backup information between the regions is not performed. Therefore, the total amount of data in the region-to-region transfer is reduced compared with a configuration in which the full backup information is transmitted from the active system region 1 to the standby system region 2 without exception. In particular, the transmission frequency is reduced for the full backup information whose data amount per transmission is larger than that of the incremental backup information. This reduces the load to the communication path between the regions, thereby suppressing occurrence of the congestion. This also reduces delay in the reflection of backup into the standby system region 2.

In this embodiment, the DB server 20 determines whether to transmit the full backup information to the backup server 50. However, in place of the DB server 20, the backup server 10 may determine whether to transmit. More specifically, the backup server 10 may include functions of the estimated time calculation unit 214 and the determination unit 215 described in this embodiment.

For example, the full backup processing unit 512 of the backup server 50 may be replaced with the full backup function of the DB server by temporarily activating the DB server in the standby system region 2.

The information processing system S described in this embodiment uses the full backup and the incremental backup in combination. However, for example, even when the information processing system S uses the full backup and the differential backup in combination, technical effects by processing of this embodiment may be obtained.

### [Hardware Configuration Example]

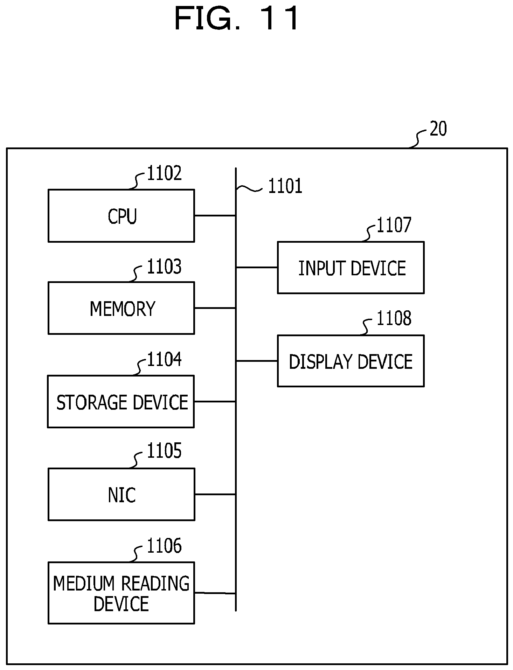

FIG. 11 illustrates a hardware configuration example of the DB server 20 according to this embodiment. Although FIG. 11 illustrates an example of the hardware configuration of the DB server 20, the same configuration also may be employed for backup servers 10 and 50, the AP server 30, and the management device 40 as described later.

The DB server 20 is, for example, an information processing apparatus including a central processing unit (CPU) 1102, a memory 1103, a storage device 1104, a NIC 1105, a medium reading device 1106, an input device 1107, and a display device 1108, which are mutually coupled with each other via a bus 1101.

The CPU 1102 performs various operation controls in the DB server 20. The memory 1103 and the storage device 1104 store programs executing various kinds of processing described in this embodiment and various data used in various kinds of processing. The storage device 1104 is a storage medium including, for example, a HDD and a solid state drive (SSD).

The CPU 1102 may implement, for example, functional units included in the processing unit 210 illustrated in FIG. 3 by reading programs stored in the memory 1103 or the storage device 1104 and then executing processing and control in accordance with the programs. For example, when the backup servers 10 and 50 are implemented by the hardware which is the same as the hardware illustrated in FIG. 11, the processing units 110 and 510 may be implemented in the same manner. The CPU 1102 may be replaced with a hardware circuit such as a micro processing unit (MPU) and an application specific integrated circuit (ASIC).

The memory 1103 and the storage device 1104 respectively may function, for example, as the storage unit 220 illustrated in FIG. 3. Storage devices and memories used as the storage unit 220 may not be incorporated into the hardware of the DB server 20, and instead, an external storage device or memory to which the DB server 20 is accessible may be used. The same applies to storage units 120, 420, and 520.

The NIC 1105 is a hardware used for transmission and reception of data via a wired or wireless network. The NIC 1105 functions as the communication unit 201 under control of the CPU 1102.

The medium reading device 1106 is a device configured to read data from a recording medium, including, for example, a disk drive configured to read data stored in a disk medium such as a compact disc read only memory (CD-ROM) and a digital versatile disc read only memory (DVD-ROM) and a card slot configured to read data stored in a memory card. Part or whole of data stored in the storage unit 300 described above may be stored in a readable recording medium using the medium reading device 1106.

The input device 1107 is a device configured to receive inputs or instructions from the user (including the system manager). The input device 1107 includes, for example, a keyboard, a mouse, and a touch pad. The display device 1108 is capable of displaying various information under control of the CPU 1102. The display device 1108 is, for example, a liquid crystal display.

Description of backup servers 10 and 50, the AP server 30, and the management device 40 of this embodiment is omitted since a computer of the same hardware configuration as illustrated in FIG. 11 may be used. However, specific hardware (including model and performance) of the CPU, the memory, the storage device, the NIC, the medium reading device, the input device, and the output device may be different among the devices.

## Claims

1. A transmission control program that causes a computer to execute a process, the process comprising:
transmitting update data to a first backup device in a specified period, the update data indicating a content of one or more updates regarding data in a database during the specified period, the specified period being a period after a first backup data is generated and before a second backup data is generated;
causing the first backup device to transmit the update data to a second backup device;
transmitting the second backup data to the first backup device when the second backup data is generated;
determining whether to cause the first backup device to transmit the second backup data to the second backup device based on a data amount of the second backup data, a data amount of the update data, and a communication state of a communication path between the first backup device and the second backup device; and
causing the first backup device to transmit a generation request of the second backup data to the second backup device without transmitting the second backup data to the second backup device when the determining does not determine to cause the first backup device to transmit the second backup data.

2. The transmission control program according to claim 1, wherein
the second backup device generates, upon a reception of the generation request, the second backup data based on the update data received from the first backup device.

3. The transmission control program according to claim 1, wherein
the determining determines whether to cause the first backup device to transmit the second backup data further based on a processing performance of the second backup device.

4. The transmission control program according to claim 3, wherein
the processing performance includes a data write speed of the second backup device to a storage device.

5. The transmission control program according to claim 1, wherein
the computer and the first backup device are located in a first data center; and wherein
the second backup device is located in a second data center different from the first data center.

6. A transmission control device comprising:
a memory; and
a processor coupled to the memory and the processor configured to execute a process, the process including:
a transmitter that transmits update data to a first backup device in a specified period, the update data indicating a content of one or more updates regarding data in a database during the specified period, the specified period being a period after a first backup data is generated and before a second backup data is generated, the transmitter transmitting the second backup data to the first backup device when the second backup data is generated;
a control unit that causes the first backup device to transmit the update data to a second backup device; and
a determination unit that determines whether to cause the first backup device to transmit the second backup data to the second backup device based on a data amount of the second backup data, a data amount of the update data, and a communication state of a communication path between the first backup device and the second backup device; wherein
the control unit causes the first backup device to transmit a generation request of the second backup data to the second backup device without transmitting the second backup data to the second backup device when the determining does not determine to cause the first backup device to transmit the second backup data.

7. A transmission control method executed by a first backup device used for backup of data in a database, the transmission control method comprising:
upon a reception of update data in the database, transmitting the update data to a second backup device in a specified period, the update data indicating a content of one or more updates regarding data in a database during the specified period, the specified period being a period after a first backup data is generated and before a second backup data is generated;
receiving the second backup data when the second backup data is generated;
determining whether to transmit the second backup data to the second backup device based on a data amount of the second backup data, a data amount of the update data, and a communication state of a communication path between the first backup device and the second backup device; and
transmitting a generation request of the second backup data to the second backup device without transmitting the second backup data to the second backup device when the determining does not determine to transmit the second backup data.
